Europäisches Patentamt

European Patent Office

Office européen des brevets

(11) Publication number: **0 651 236 A1**

# EUROPEAN PATENT APPLICATION

(21) Application number: 93117391.8

(51) Int. Cl.6: **G01K 7/18**

(22) Date of filing: **27.10.93**

(43) Date of publication of application:
**03.05.95 Bulletin 95/18**

(84) Designated Contracting States:
**AT BE CH DE DK ES FR GB GR IE IT LI LU MC NL PT SE**

(71) Applicant: **GITEM Technical and Production Complex of SEPO JSCo**
**pr. 50 years of October**
**Saratov, 410033 (RU)**
Applicant: **VYMPEL-S Limited Partnership**
**3, Alekseyevskaya Street**
**Saratov, 410009 (RU)**

(72) Inventor: **Alekseevich, Shilyaev Anatoly**
**8, k.1, flat 31, Yaroslavskoye sh.**
**RU-129348 Moscow (RU)**
Inventor: **Idrisovich, Ajupov Abrek**
**20, k.1, flat 7, ul.Marshala Birjuzova**
**RU-123060 Moscow (RU)**
Inventor: **Victorovich, Safonov Vladimir**
**8, k.1, flat 194,**
**Yaroslavskoye sh.**
**RU-129348 Moscow (RU)**
Inventor: **Nicolaevich, Emohonov Victor**

**52, flat 35, ul.Tverskaya-Yamskaya**
**RU-125047 Moscow (RU)**
Inventor: **Fedorovich, Antonovsky Alexander**
**136, k.2, flat 139,**
**ul.Profsoyuznaya**
**RU-117321 Moscow (RU)**
Inventor: **Nicolaevich, Goncharov Igor**
**16a, flat 95, ul.Krasikova**
**Moscow (RU)**
Inventor: **Vasilyevich, Sidorenko Anatoly**
**9, k.8, flat 111,**
**ul.Teply Stan**
**RU-117465 Moscow (RU)**
Inventor: **Egorovich, Alexandrov Vasily**
**25, flat 94, prospect Vernadskogo**
**RU-117131 Moscow (RU)**
Inventor: **Gennadievich, Yasinsky Valery**
**3, flat 59, ul.Malysheva**
**RU-109129 Moscow (RU)**

(74) Representative: **Patentanwälte Zellentin & Partner**
**Zweibrückenstrasse 15**
**D-80331 München (DE)**

(54) **Surface film resistance thermometer.**

(57) The invention belongs to the field of physics, more specifically, to measuring equipment and can be used for measuring the surface temperature of the bodies of complicated shape and also for measuring the temperature of gases and liquids.

The problem at the solution of which the given invention is aimed and the technical result realised by it can be formulated as creating the surface film resistance thermometer which helps to provide for the increased accuracy of measurement and to achieve the interchangeability of the resistance thermometers of the same type.

The resistance thermometer has a film sensing element 1 with contact leads 2 and 3. The sensing element 1 with dielectric and adhesional coating applied to it is encased into flexible dielectric shell. The layer 5 of metal of the sensing element 1 alternated with layer 6 of material different from the material of the sensing element 1 are applied over flexible dielectric.

EP 0 651 236 A1

The invention belongs to the field of physics, more specifically, to measuring equipment and can be used for measuring the surface temperature of the bodies of complicated shape and also for measuring the temperature of gases and liquids; can be used also in standard technical resistance thermometers.

A platinum film resistance thermometer containing a flat ceramic backing and a platinum film sensing element with contact leads applied to it in the form of meander is known from modern level of technology. To protect the active platinum layer from damage and exposure to environment the sensing element as well as the ceramic backing is covered with protective ceramic coating.

(Franzis Electronic-Fachbuch, Gerhard Wiegleb,"Sensortechnik. Ubersicht, Application, Anwendungen", 1986, Franzis-Verlag GmbH, Munchen.) [1]

For measuring the surface temperature of bodies the surface film probes are used - the sensing elements usually made of nickel or platinum and encased into flexible plastic shell. A surface film resistance thermometer containing a film sensing element in the form of meander with contact leads at its ends chosen as a prototype can serve as the example of such thermometer.

("Les Capteurs en Instrumentation Industrielle", par Georges Asch, Ingenieur E.S.E., Professeur a l'universite Lyon 1 avec la collaboration, BORDAS, Paris, 1991) [2]

Assessing the existing level of technology it can be said that the analogue of the resistance thermometer 1 itself is not stable enough and, consequently, has the lowered accuracy of measurement. The reason for the instability is the soiling of platinum by the reinforced material and appearance of mechanical stress while using it due to different coefficients of thermal expansion of the material of the ceramic backing and that of the sensing element (platinum).

Concerning the prototype of the resistance thermometer [2] it should be noted that the coefficients of thermal expansion of the dielectric shell and of the sensing element are different, and the resistance of the sensing element depends on the deformations of the thermometer. In this situation it proves to be impossible to create interchangeable thermometers as they all need individual graduation, each possessing a specific nature of its own. Besides, such thermometers possess histeresis due to the chemical interaction of the material of the shell with the material of the sensing element, and the dislocations leading to histeresis of the electric properties of the thermometer and, finally, to measurement error, appear in the film of the sensing element while thermocycling due to mechanical stress, appearing in connection with the difference of the coefficients of thermal expansion of the sensing element and the dielectric shell.

The problem at the solution of which the given invention is aimed and the technical result achieved by the given invention can be formulated as the creating of the surface film resistance thermometer with the help of which the increased accuracy of measurement and the interchangeability of resistance thermometers of the same type is achieved.

The given problem is solved and the technical result is achieved so that in the surface film resistance thermometer containing a film metallic sensing element in the form of meander with the contact leads at is ends, encased into a flexible dielectric shell in accordance with the invention the sensing element is produced with the dielectric chemical inert ceramic coating applied to it on both sides and the adhesional coating applied to the sensing element over the protective ceramic coating forming the "splint" of the sensing element in which the correlation of the total thickness L1 of the protective ceramic and adhesional coating and the thickness L0 of the metallic film of the sensing element is determined by the inequality $L1/L0 \ll 1$, the flexible dielectric shell is produced in the form of the film coating applied to both sides of the sensing element, the former having the same thickness L2 on both sides, connected and interacting directly with the sensing element and filling in the spaces in the intervals between its branches, the resistance thermometer is supplied with the layers of material of the thickness identical on both sides of the flexible dielectric shell successively alternated with each other in the same order on both sides of the latter applied to both surfaces of the flexible dielectric shell, of the material of the sensing element and of heat and chemically stable material other than the material of the sensing element, while the average coefficient of thermal expansion K of the resistance thermometer satisfies the correlation $K = Km$, where Km is the coefficient of thermal expansion of the metal - material of the sensing element.

The correlation of the total thickness of the metal of the sensing element, including the thickness L0 of the sensing element itself, $2L3 + L0$ and the total thickness 2L2 of the flexible dielectric shell satisfies the following inequality

$$\frac{Em}{Ep} \cdot \frac{2L3+L0}{2L2} \gg 1,$$

where

Em - modulus of elasticity of the metal of the sensing element,

Ep - modulus of elasticity of the flexible dielectric.

The coefficient of thermal expansion Kt of heat and chemically stable material other than the material of the sensing element, is chosen from the following correlations:

Kt<Km, if K>Km, or

Kt>Km, if K<Km.

If the layers of material of the material of the sensing element and layers of heat and chemically stable material other than the material of the sensing element forming the alternating pair, are alternated more than twice, the resistance thermometer is supplied with at least one additional flexible dielectric layer on each side of the flexible dielectric shell situated between the alternating pairs.

The invention is supplemented with explanatory drawings, where

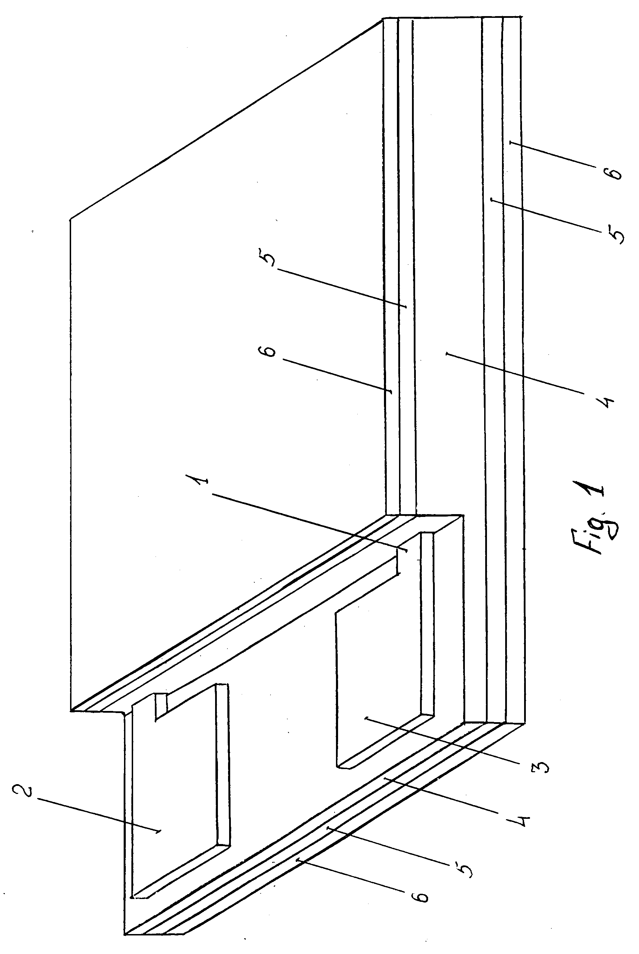

Fig. 1 shows the surface film resistance thermometer;

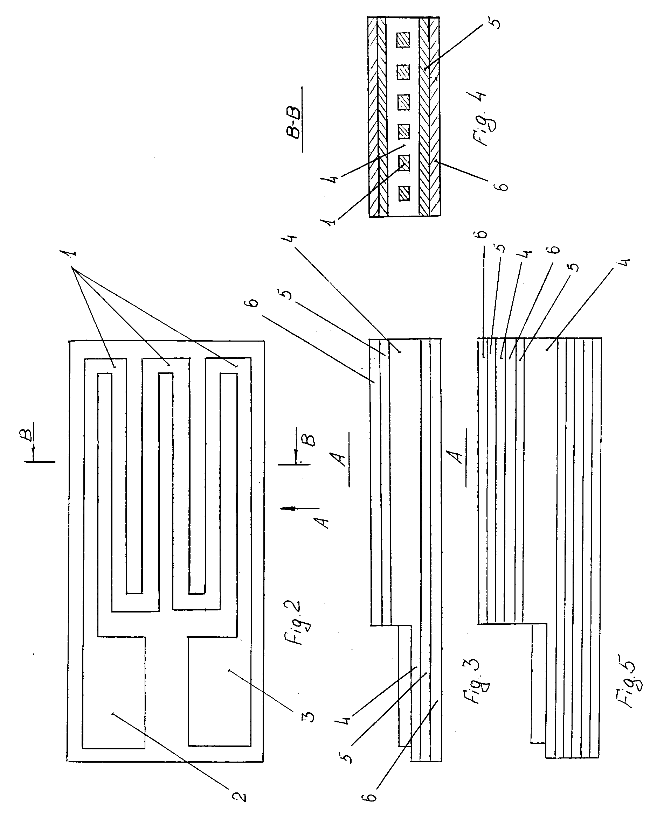

Fig.2 - the same view from above with the illustration of the sensing element;

Fig.3 - view A of Fig.2;

Fig.4 - section B-B of Fig.2;

Fig.5 - view A of Fig.2 after p.5 of the claims.

The surface film resistance thermometer has a film metallic sensing element 1 in the form of meander with contact leads 2 and 3 at its ends. The sensing element 1 is produced with the dielectric chemical inert ceramic coating (not shown) applied to it on two sides and with the additional coating (not shown) applied to the sensing element 1 over protective ceramic coating forming the "splint" of the sensing element 1. The correlation of the total thickness L1 of the protective ceramic and adhesional coating and thickness L0 of the metallic film of the sensing element 1 is determined by the inequality L1/L0<<1. The flexible dielectric 4 shell of the resistance thermometer is produced in the form of the film coating applied to both sides of the sensing element 1 and connected and interacting directly with the sensing element 1 and filling in the space in the intervals between its branches. The thickness L2 of the flexible dielectric 4 on both sides of the film of the sensing element 1 is identical. Successively alternating layers of metal 5 with thickness L3 identical on both sides of the flexible dielectric 4 of material of the sensing element 1 of heat and chemically stable material 6 other than material of the sensing element 1 are applied to both surfaces of the flexible dielectric 4 shell in the same order, forming the alternating pairs.

It should be noted that there can be any number of alternating pairs of layers 5 and 6, and the order of arrangement of layers 5 and 6 relatively to flexible dielectric 4 can be arbitrary.

The average coefficient of the thermal expansion K of the whole resistance thermometer received in the final analysis satisfies the correlation K=Km, where Km - the coefficient of thermal expansion of the metal - material of the sensing element.

It must be kept in mind that the correlation of the total thickness of the metal of the sensing element 1, including the thickness L0 of the sensing element 1 itself 2L3 + L0 and total thickness 2L2 of the flexible dielectric 4 shell can be chosen from the requirements of the following inequality

$$\frac{Em}{Ep} \quad \frac{2L3+L0}{2L2} \quad >>1,$$

where

Em - modulus of elasticity of the metal of the sensing element 1,

Ep - modulus of elasticity of the flexible dielectric 4.

The coefficient of thermal expansion Kt of heat and chemically stable material 6 other than the material of the sensing element 1, is chosen from the following correlations

Kt<Km, if K>Km, or

Kt>Km, if K<Km.

When the layers of metal 5 of material of the sensing element 1 are alternated, forming the alternating pair with the layer of heat and chemically stable material 6 other than material of the sensing element 1 more than once, the resistance thermometer can be supplied with an additional layer 7 of flexible dielectric situated between the alternating pairs, at least one on each side of the flexible dielectric 4 shell.

The resistance thermometer functions in the following way.

The thermometer is fixed on the surface, e.g. having a complicated spatial shape, whose temperature must be measured, or in the pipeline of fluid' medium (gas, liquid) whose temperature is measured. Owing to the flexible dielectric 4 the sensing element 1 can conform to any shape. Through the contact leads 2 and 3 the thermometer is brought into electric circuit (not shown). Under the influence of the measured temperature the sensing element 1 expands (lengthens) or compresses (shortens) thus changing its resistance. The resistance - the sensing element 1 brought into electric curcuit changes the characteristics of the current in the circuit; change of the current character in the circuit is output through the converter (not shown) to the digital indicator fixing the measured temperature of the medium or body. The protective ceramic layer in the "splint" of the sensing element 1 allows to except the chemical interaction between the flexible dielectric 4 material and the metal of the film of the sensing element 1.

The character variable change of length of the sensing element 1 with the coefficient of thermal expansion Km different from the coefficient of thermal expansion of the flexible dielectric 4 takes place while thermocycling. To damp the difference of the thermal expansion between the sensing element 1 and the flexible dielectric 4, a layer 6 of heat and chemically stable material other than the material of the sensing element 1 is injected into the thermometer alongside with the layer of metal 5 of the material of the sensing element 1. This layer 6 functions as heat compensator with whose help the result K = Km is achieved. As a result the coefficient of thermal expansion of the sensing element 1 is in the final analysis equal to the coefficient of thermal expansion of the resistance thermometer in general, which helps to avoid the appearance of mechanical stress due to the difference of the coefficients of thermal expansion. Besides, the layer 6 protects the flexible dielectric from damage and arising of dislocations leading to measurement error.

It must be noted separately that the obtained structure provides for the interchangeability of resistance thermometers; one sensor can be substituted for its analogue without individual graduation.

## Claims

1. The surface film resistance thermometer, containing a film metal sensing element 1 in the form of meander with contact leads 2 and 3 at its ends, encased into a flexible dielectric shell with the distinction that the sensing element 1 is produced with dielectric chemical inert ceramic coating applied to it on both sides and adhesional coating applied to the sensing element 1 over protective ceramic coating forming the "splint" of the sensing element 1, where the correlation between the total thickness L1 of protective ceramic and adhesional coating and the thickness L0 of the metallic film of the sensing element 1 is determined by the inequality L1/ L0<<1, the flexible dielectric 4 coating is produced in the form of film coating of the same thickness L2 on both sides applied to both sides of the sensing element 1, connected and interacting directly with the sensing element 1 and filling in the spaces in the intervals between its branches, the resistance thermometer is supplied with layers of metal 5 applied to both surfaces of the flexible dielectric 4 shell, successively alternated with each other in the same order on both sides of the latter, of the material of the sensing element 1 and heat and chemically stable material 6 other than the material of the sensing element 1, while the average coefficient of thermal expansion K of the resistance thermometer satisfies the correlation K = Km, where Km - the coefficient of thermal expansion of the metal - material of the sensing element 1.

2. The surface film resistance thermometer after p.1, with the distinction that the correlation of the total thickness of the metal of the sensing element 1 including the thickness L0 of the sensing element 1 itself 2L3 + L0 and the total thickness 2L2 of the flexible dielectric 4 shell satisfies the following inequality

$$\frac{Em}{Ep} \quad \frac{2L3+L0}{2L2} >> 1 \ ,$$

where
Em - modulus of elasticity of the metal of the sensing element 1,
Ep - modulus of elasticity of the flexible dielectric 4.

3. The surface film resistance thermometer after p.1, with the distinction that the coefficient of thermal expansion Kt of heat and chemically stable material 6, other than the material of the sensing element 1 is chosen out of the following correlations:
Kt<Km, if K>Km, or
Kt>Km, if K<Km.

4. The surface film resistance thermometer after p.1, with the distinction that with the layers of metal 5 of the material of the sensing element 1 and the layer of heat and chemically stable material 6 other than the material of the sensing element 1 alternating more than once thus forming an alternating pair, the resistance thermometer is supplied with an additional layer 7 of flexible dielectric situated between the alternating pairs, at least one on each side of the flexible dielectric 4 shell.

Fig. 1

B-B

Fig. 4

Fig. 2

Fig. 3

Fig. 5

6

European Patent Office

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A | DE-A-26 15 473 (HERAEUS) 13 October 1977<br>* page 5, paragraph 1; figures *<br>* page 7, paragraph 2 - page 8 * | 1 | G01K7/18 |
| | | | **TECHNICAL FIELDS SEARCHED** (Int.Cl.6) |
| | | | G01K |

The present search report has been drawn up for all claims

| Place of search | Date of completion of the search | Examiner |
|---|---|---|
| THE HAGUE | 22 February 1994 | Ramboer, P |